# EUROPEAN PATENT APPLICATION

(11) **EP 4 835 746 A1**
(43) Date of publication of application: **04.11.2026**
(21) Application number: 24918010.0
(22) Date of filing: 05.08.2024
(51) Int. Cl.: G06N 5/04, G06F 9/50

(54) **REASONING METHOD AND DEVICE FOR LARGE LANGUAGE MODEL**

(30) Priority: 18.01.2024 CN 202410077193; 28.02.2024 CN 202410223757
(71) Applicant: Huawei Cloud Computing Technologies Co., Ltd., Gui'an New District, Guizhou 550025 (CN)
(72) Inventor: CHEN, Xusheng, Guiyang, Guizhou 550025 (CN); SHAN, Yizhou, Guiyang, Guizhou 550025 (CN); FENG, Hao, Guiyang, Guizhou 550025 (CN); ZHANG, Qin, Guiyang, Guizhou 550025 (CN); DENG, Xiaoyang, Guiyang, Guizhou 550025 (CN); DAN, Gengyuan, Guiyang, Guizhou 550025 (CN)
(74) Representative: Pfenning, Meinig & Partner mbB
(86) International application number: PCT/CN2024/109747
(87) International publication number: WO 2025/152398

(57) **Abstract**

Embodiments of this application disclose a large language model inference method and apparatus to reduce bandwidth consumption of large language model inference. The method **in** embodiments of this application includes: A parallel inference system receives an inference task of a large language model, where the inference task includes a compute-intensive task and a self-attention compute task. A processor executes the compute-intensive task to generate intermediate data and sends the intermediate data to a near-storage computing module, where the compute-intensive task includes one or more of the following tasks of the large language model: a feed-forward neural network compute task, a projection task, and a layer normalization task. The near-storage computing module executes the self-attention compute task based on the intermediate data to generate a near-storage computation result. The processor generates, based on the near-storage computation result, an inference result corresponding to the inference task.

## Description

This application claims priorities to Chinese Patent Application No. 202410077193.4, filed with the China National Intellectual Property Administration on January 18, 2024 and entitled "DATA PROCESSING METHOD, APPARATUS, AND ANOTHER DEVICE", and to Chinese Patent Application No. 202410223757.0, filed with the China National Intellectual Property Administration on February 28, 2024 and entitled "LARGE LANGUAGE MODEL INFERENCE METHOD AND APPARATUS", both of which are incorporated herein by reference in their entireties.

### TECHNICAL FIELD

Embodiments of this application relate to the storage field, and in particular, to a large language model inference method and apparatus.

### BACKGROUND

With the development of machine learning and related technologies, large language models (large language models, LLMs) driven by machine learning have been widely applied. For example, large language models can automatically generate language text or replies, and may be used in tasks such as machine translation, speech recognition, question answering, and dialog generation.

In current inference processes of the large language model, compute devices implement inference by using processors such as graphics processing units (graphics processing units, GPUs) and neural network processing units (neural processing units, NPUs). During inference, the compute devices rely on the high-bandwidth memory of the processors to store intermediate data and computation results.

However, when the input text of a large language model is ultra-long, memory bottlenecks of the processors in the compute devices prevent full utilization of computational performance, resulting in low utilization of the processors. In addition, if the compute devices increase the high-bandwidth memory of the processors to process the ultra-long input text, inference costs of the large language model are increased.

### SUMMARY

Embodiments of this application provide a large language model inference method. A compute device offloads a bandwidth-intensive self-attention compute task to a near-storage computing module, so that a processor of the compute device can avoid memory bottlenecks when executing a compute-intensive task, thereby improving utilization of the processor and reducing inference costs of a large language model. Embodiments of this application further provide a large language model inference apparatus, a compute device, a compute device cluster, a computer-readable storage medium, and a computer program product that correspond to the large language model inference method.

According to a first aspect, an embodiment of this application provides a large language model inference method. The method is applied to a parallel inference system, the parallel inference system includes a processor and a near-storage computing module, and both the processor and the near-storage computing module are configured to execute a task allocated by the parallel inference system. The method provided in the first aspect includes: The parallel inference system receives an inference task of a large language model, where the inference task includes a compute-intensive task and a self-attention compute task. The processor executes the compute-intensive task to generate intermediate data and sends the intermediate data to the near-storage computing module, where the compute-intensive task includes one or more of the following tasks of the large language model: a feed-forward neural network compute task, a projection task, and a layer normalization task. The near-storage computing module executes the self-attention compute task based on the intermediate data to generate a near-storage computation result. The processor generates, based on the near-storage computation result, an inference result corresponding to the inference task.

In this embodiment of this application, the processor in the parallel inference system can send the intermediate data generated by executing the compute-intensive task to the near-storage computing module, so that the near-storage computing module executes the bandwidth-intensive self-attention compute task based on the intermediate data. In this way, the self-attention compute task is offloaded from the processor to the near-storage computing module, so that the processor of the compute device can avoid memory bottlenecks when executing the compute-intensive task, thereby improving utilization of the processor. In addition, a requirement for a high bandwidth memory in the processor is reduced, and inference costs of the large language model are reduced.

In a possible implementation, a storage capacity of the near-storage computing module is greater than a storage capacity of the processor, storage costs of the near-storage computing module are lower than storage costs of the processor, and computational power of the processor is greater than computational power of the near-storage computing module. The parallel inference system may allocate the self-attention compute task with high storage resource occupation to the near-storage computing module for execution, and allocate the compute-intensive task with a high computational power requirement to the processor for execution.

In this embodiment of this application, because the storage capacity of the near-storage computing module is greater than the storage capacity of the processor, the parallel inference system may allocate the self-attention compute task with high storage resource occupation to the near-storage computing module for execution, to alleviate the memory bottlenecks of the processor. In addition, the computational power of the processor is greater than the computational power of the near-storage computing module, and the parallel inference system may also allocate the compute-intensive task to the processor for execution, to improve utilization of the processor and further improve inference efficiency of the large language model.

In a possible implementation, the inference task corresponds to one or more segments of to-be-processed text, and a length of the to-be-processed text is greater than or equal to a first threshold. The first threshold is, for example, 1000 characters, that is, the large language model may be used to process an ultra-long text sequence, and the large language model needs to consume more storage resources when processing the ultra-long text sequence.

In this embodiment of this application, the large language model may be used to process the ultra-long text sequence. In addition, the parallel inference system offloads the self-attention compute task with high storage resource occupation to the near-storage computing module, thereby improving utilization of the processor, reducing memory consumption of the processor, and further improving inference efficiency of the large language model.

In a possible implementation, the parallel inference system includes multiple near-storage computing modules. In a process in which the processor sends the intermediate data to the near-storage computing module, the processor segments the intermediate data into multiple intermediate data segments. The processor sends the multiple intermediate data segments to the multiple near-storage computing modules. In a process in which the near-storage computing module executes the self-attention compute task based on the intermediate data, the multiple near-storage computing modules execute the self-attention compute task in parallel based on the multiple intermediate data segments to generate near-storage computation results corresponding to the multiple near-storage computing modules. In a process in which the processor generates, based on the near-storage computation result, the inference result corresponding to the inference task, the processor performs reduction computation on the near-storage computation results corresponding to the multiple near-storage computing modules, and generates the inference result corresponding to the inference task.

In this embodiment of this application, the parallel inference system includes the multiple near-storage computing modules. The processor may segment the intermediate data generated by executing the compute-intensive task, and the multiple near-storage computing modules execute the self-attention compute task in parallel based on intermediate data segments, to improve inference efficiency of the large language model. In addition, the multiple near-storage computing modules execute the self-attention compute task in parallel, to reduce a hardware requirement for the near-storage computing module and further reduce inference costs of the large language model.

In a possible implementation, in a process in which the processor sends the multiple intermediate data segments to the multiple near-storage computing modules, the processor cyclically sends the multiple intermediate data segments to the multiple near-storage computing modules respectively, so that a difference among total lengths of the intermediate data segments in the multiple near-storage computing modules is less than or equal to a second threshold, that is, the processor evenly allocates the pieces of segmented intermediate data to the multiple near-storage computing modules for processing.

In this embodiment of this application, the processor in the parallel inference system can evenly allocate the generated intermediate data to different near-storage computing modules based on data lengths of the different near-storage computing modules, to improve a balance in executing the self-attention compute task by the multiple near-storage computing modules in the parallel inference system.

In a possible implementation, the intermediate data includes a query matrix and key-value cache data. In a process in which the near-storage computing module executes the self-attention compute task based on the intermediate data, the near-storage computing module performs batched self-attention computation based on the query matrix and the key-value cache data to generate the near-storage computation result. If the parallel inference system includes multiple near-storage computing modules, the multiple near-storage computing modules may perform self-attention computation in parallel to generate respective near-storage computation results. The multiple near-storage computing modules send the respective near-storage computation results to the processor.

In this embodiment of this application, the near-storage computing module in the parallel inference system can perform batched self-attention computation based on the query matrix and the key-value cache data to generate the near-storage computation result, to improve implementability of the solution.

In a possible implementation, when the parallel inference system includes the multiple near-storage computing modules, the processor may send the query matrix in the intermediate data to the multiple near-storage computing modules in a broadcast manner, and the processor may sequentially send the key-value cache data in the intermediate data to the multiple near-storage computing modules in an append manner.

In this embodiment of this application, the processor in the parallel inference system may send different types of intermediate data to the near-storage computing module in different manners, to improve diversity of sending the intermediate data by the processor to the near-storage computing module.

In a possible implementation, the processor and the near-storage computing module can process the inference task of the large language model in a pipeline parallel manner. The large language model includes multiple transformer layers, each of the multiple transformer layers includes a compute-intensive task and a self-attention compute task, execution of a compute-intensive task at a current transformer layer depends on a near-storage computation result of a previous transformer layer, and the parallel inference system executes the compute-intensive task and the self-attention compute task in parallel at each transformer layer, where the compute-intensive task is executed by the processor, and the self-attention compute task is executed by the near-storage computing module.

In this embodiment of this application, in a process in which the parallel inference system executes the inference task of the large language model, the compute-intensive task and the self-attention compute task can be executed by the processor and the near-storage computing module respectively in the pipeline parallel manner, so that idle time of the processor and the near-storage computing module in the parallel inference system is reduced, and inference efficiency of the large language model is improved, and the processor and the near-storage computing module work at full load to reduce inference costs of the large language model.

In a possible implementation, the processor includes one or more of the following: a graphics processing unit GPU, a neural network processing unit NPU, and a data processing unit DPU.

In this embodiment of this application, the processor in the parallel inference system may be multiple types of processors, and different types of processors are applicable to different types of inference tasks, to improve applicability of the inference method.

According to a second aspect, an embodiment of this application provides a large language model inference apparatus, applied to a parallel inference system. The parallel inference system includes a processor and a near-storage computing module. Both the processor and the near-storage computing module are configured to execute a task allocated by the parallel inference system. The task processing apparatus includes a transceiver unit and a processing unit. The transceiver unit is configured to receive an inference task of a large language model, where the inference task includes a compute-intensive task and a self-attention compute task. The processing unit is configured to execute, through the processor, the compute-intensive task to generate intermediate data, and send the intermediate data to the near-storage computing module, where the compute-intensive task includes one or more of the following tasks of the large language model: a feed-forward neural network compute task, a projection task, and a layer normalization task. The processing unit is further configured to execute, through the near-storage computing module, the self-attention compute task based on the intermediate data to generate a near-storage computation result. The processing unit is further configured to generate, based on the near-storage computation result, an inference result corresponding to the inference task.

In a possible implementation, a storage capacity of the near-storage computing module is greater than a storage capacity of the processor, and computational power of the processor is greater than computational power of the near-storage computing module.

In a possible implementation, the inference task corresponds to one or more segments of to-be-processed text, and a length of the to-be-processed text is greater than or equal to a first threshold.

In a possible implementation, the parallel inference system includes multiple near-storage computing modules. The processing unit is configured to segment, through the processor, the intermediate data into multiple intermediate data segments; and send, through the processor, the multiple intermediate data segments to the multiple near-storage computing modules. The processing unit is specifically configured to execute, through the near-storage computing modules, the self-attention compute task in parallel based on the multiple intermediate data segments to generate near-storage computation results corresponding to the multiple near-storage computing modules. The processing unit is specifically configured to perform, through the processor, reduction computation on the near-storage computation results corresponding to the multiple near-storage computing modules, and generate the inference result corresponding to the inference task.

In a possible implementation, the transceiver unit is specifically configured to cyclically send, through the processor, the multiple intermediate data segments to the multiple near-storage computing modules respectively, so that a difference among total lengths of the intermediate data segments in the multiple near-storage computing modules is less than or equal to a second threshold.

In a possible implementation, the intermediate data includes a query matrix and key-value cache data, and the processing unit is specifically configured to perform, through the near-storage computing module, batched self-attention computation based on the query matrix and the key-value cache data to generate the near-storage computation result.

In a possible implementation, the large language model includes multiple transformer layers, each of the multiple transformer layers includes a compute-intensive task and a self-attention compute task, execution of a compute-intensive task at a current transformer layer depends on a near-storage computation result of a previous transformer layer, and the processing unit is further configured to execute the compute-intensive task and the self-attention compute task in parallel at each transformer layer, where the compute-intensive task is executed by the processor, and the self-attention compute task is executed by the near-storage computing module.

In a possible implementation, the processor includes one or more of the following: a graphics processing unit GPU, a neural network processing unit NPU, and a data processing unit DPU.

According to a third aspect, an embodiment of this application provides a compute device. The compute device includes a processor, the processor is coupled to a storage, and the processor is configured to store instructions. When the instructions are executed by the processor, the compute device is enabled to implement the method in any one of the first aspect or the possible implementations of the first aspect.

According to a fourth aspect, an embodiment of this application provides a compute device cluster. The compute device cluster includes one or more compute devices, the compute device includes a processor, the processor is coupled to a storage, and the processor is configured to store instructions. When the instructions are executed by the processor, the compute device cluster is enabled to implement the method in any one of the first aspect or the possible implementations of the first aspect.

According to a fifth aspect, an embodiment of this application provides a computer-readable storage medium. The computer-readable storage medium stores instructions. When the instructions are executed, a computer is enabled to implement the method in any one of the first aspect or the possible implementations of the first aspect.

According to a sixth aspect, an embodiment of this application provides a computer program product. The computer program product includes instructions. When the instructions are executed, a computer is enabled to implement the method in any one of the first aspect or the possible implementations of the first aspect.

It may be understood that for beneficial effect that can be achieved by any one of the large language model inference apparatus, the compute device, the compute device cluster, the computer-readable medium, the computer program product, or the like provided above, refer to the beneficial effect in the corresponding method. Details are not described herein again.

### BRIEF DESCRIPTION OF DRAWINGS

FIG. 1 is a diagram of a system architecture of a large language model inference system according to an embodiment of this application;
FIG. 2 is a schematic flowchart of a large language model inference method according to an embodiment of this application;
FIG. 3 is another schematic flowchart of a large language model inference method according to an embodiment of this application;
FIG. 4 is another flowchart of a large language model inference method according to an embodiment of this application;
FIG. 5 is a schematic flowchart of parallel inference of a processor and a near-storage computing module according to an embodiment of this application;
FIG. 6 is another schematic flowchart of parallel inference of a processor and a near-storage computing module according to an embodiment of this application;
FIG. 7 is a diagram of a structure of a large language model inference apparatus according to an embodiment of this application;
FIG. 8 is a diagram of a structure of a compute device according to an embodiment of this application;
FIG. 9 is a diagram of a structure of a compute device cluster according to an embodiment of this application; and
FIG. 10 is another diagram of a structure of a compute device cluster according to an embodiment of this application.

### DESCRIPTION OF EMBODIMENTS

Embodiments of this application provide a large language model inference method and apparatus, to improve utilization of a processor in a parallel inference system, so as to improve inference efficiency of a large language model and reduce inference costs of the large language model.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way is interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

First, some terms in embodiments of this application are described, to help a person skilled in the art understand the technical solutions.

A large language model (large language model, LLM) is a natural language processing model based on the deep learning technology, is trained by using a large amount of text data, and has capabilities of understanding, generating, and processing natural languages. The large language model treats natural language text as a type of sequence data, such as a word sequence or a character sequence, and uses a deep learning model to model a statistical rule and potential semantic information of the sequence data. The large language model can perform a wide range of tasks, including text summarization, translation, sentiment analysis, question-answer, dialogs, and the like.

A processor (x-processing unit, XPU) may also be referred to as an accelerator. In this application, processors represent processors such as a graphics processing unit (graph processing unit, GPU), a neural network processing unit (neural processing unit, NPU), and a data processing unit (data processing unit, DPU).

A high bandwidth memory (high bandwidth memory, HBM) is a general term for high bandwidth memories on the processors XPUs. For example, the high bandwidth memory is typically a video memory on the graphics processing unit GPU. The neural network processing unit NPU also has a corresponding high bandwidth memory component. The high bandwidth memory in the processor has high costs.

To make the technical solutions of this application clearer and easier to understand, the following describes a system architecture of this application with reference to the accompanying drawings.

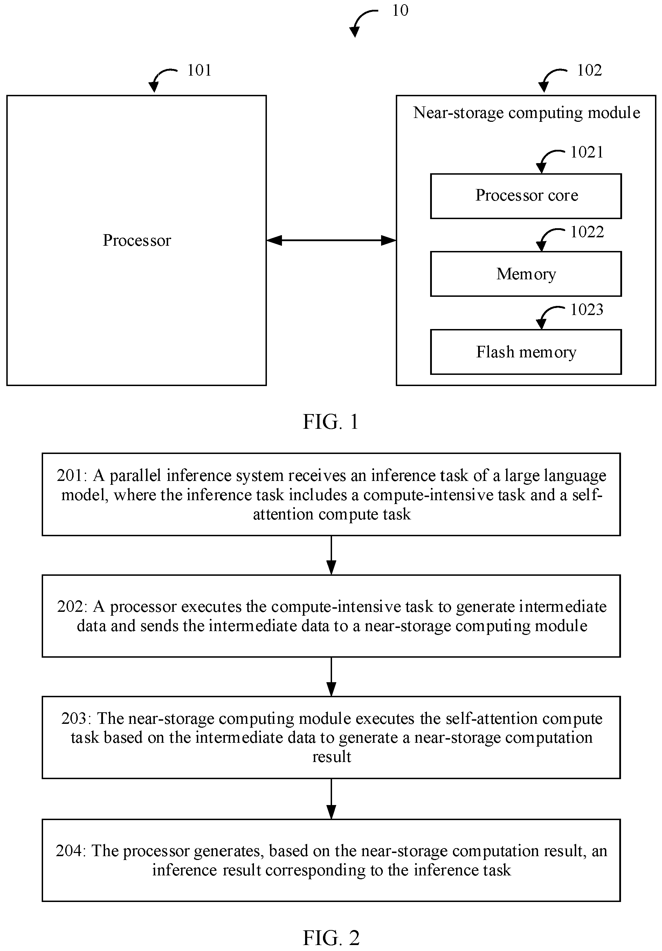

FIG. 1 is a diagram of a system architecture of a parallel inference system according to an embodiment of this application. In the system architecture shown in FIG. 1, the parallel inference system 10 is configured to execute an inference task of a large language model. The parallel inference system 10 includes a processor 101 and a near-storage computing module 102. The processor 101 and the near-storage computing module 102 are connected through a high-speed transmission bus. The near-storage computing module 102 includes a processor core 1021, a memory 1022, and a flash memory 1023. The following describes specific functions of various parts of the large language model inference system 10.

The processor 101 is configured to execute a compute-intensive task of the large language model. The compute-intensive task is a task that consumes a large quantity of compute resources of the processor in an inference process of the large language model, for example, a feed-forward neural network compute task, a projection task, and a layer normalization task. The processor 101 is further configured to send intermediate data generated by executing the compute-intensive task to the near-storage computing module 102.

It should be noted that the processor 101 may be multiple types of processors. For example, the processor 101 may be a graphics processing unit GPU, a neural network processing unit NPU, or a data processing unit DPU. This is not specifically limited.

The near-storage computing module 102 is configured to receive the intermediate data sent by the processor 101, execute a self-attention compute task based on the intermediate data to generate a near-storage computation result, where the self-attention compute task is a bandwidth-intensive task, the bandwidth-intensive task is a task that consumes a large quantity of storage resources, and the bandwidth-intensive task usually relates to read/write operations of a large amount of data and needs to occupy storage space. The near-storage computing module 102 is further configured to send the near-storage computation result to the processor 101.

The near-storage computing module 102 includes the processor core 1021, the memory 1022, and the flash memory 1023. The processor core 1021 is configured to provide computational power for executing the self-attention compute task. The memory 1022 is configured to cache temporary data in a process in which the processor core 1021 executes the self-attention compute task. The flash memory 1023 is configured to store the intermediate data sent by the processor 101, and store the near-storage computation result generated by the processor core 1021 by executing the self-attention compute task.

It should be noted that the processor 101 and the near-storage computing module 102 in the parallel inference system 10 may be deployed in a same compute device, or may be deployed in different compute devices. This is not specifically limited.

In addition, the parallel inference system 10 may be a large language model inference system including multiple processors 101 and multiple near-storage computing modules 102. When the processor 101 and the near-storage computing module 102 are deployed in different compute devices, the multiple processors 101 or the multiple near-storage computing modules 102 in the parallel inference system 10 may also be deployed on different compute devices.

It may be understood that in this embodiment of this application, the parallel inference system 10 may be applied to a long-text inference scenario. When input text of the large language model is long, a large amount of intermediate data is generated in the inference process of the large language model. If the intermediate data is stored in a high bandwidth memory of the processor 101, inference costs are increased. Therefore, the parallel inference system 10 may store the intermediate data based on the near-storage computing module 102 and execute the bandwidth-intensive task, to reduce inference costs in the long-text inference scenario.

Based on the parallel inference system 10 shown in FIG. 1, this application further provides a large language model inference method. The following describes, with reference to embodiments, the large language model inference method provided in embodiments of this application.

FIG. 2 is a schematic flowchart of a large language model inference method according to an embodiment of this application. In an example shown in FIG. 2, the method includes the following steps.

Step 201: A parallel inference system receives an inference task of a large language model, where the inference task includes a compute-intensive task and a self-attention compute task.

A parallel inference system 10 receives an inference task of a large language model, where the inference task includes a compute-intensive task and a self-attention compute task. In a process of executing the inference task of the large language model, the parallel inference system 10 allocates the compute-intensive task to a processor 101 for execution, and allocates the self-attention compute task to a near-storage computing module 102 for execution.

It may be understood that because a storage capacity of the near-storage computing module 102 is greater than a storage capacity of the processor 101, and computational power of the processor 101 is greater than computational power of the near-storage computing module 102, the parallel inference system 10 allocates the self-attention compute task with high storage resource occupation to the near-storage computing module 102 for execution, to improve utilization of the processor 101.

In an example of step 201, the parallel inference system 10 may receive the inference task of the large language model. For example, the parallel inference system 10 receives input text of a user, and obtains output text through inference based on the input text of the user. The input text may be a sentence or a paragraph of a question asked by the user, and the output text may be a question answer, a text summary, a translation result, or the like corresponding to the input text. Specifically, in a process in which the parallel inference system 10 generates the output text corresponding to the input text, the parallel inference system 10 performs inference on the input text of the user based on a multi-layer structure of the large language model, where the compute-intensive task and the self-attention compute task need to be executed at each transformer layer of the large language model.

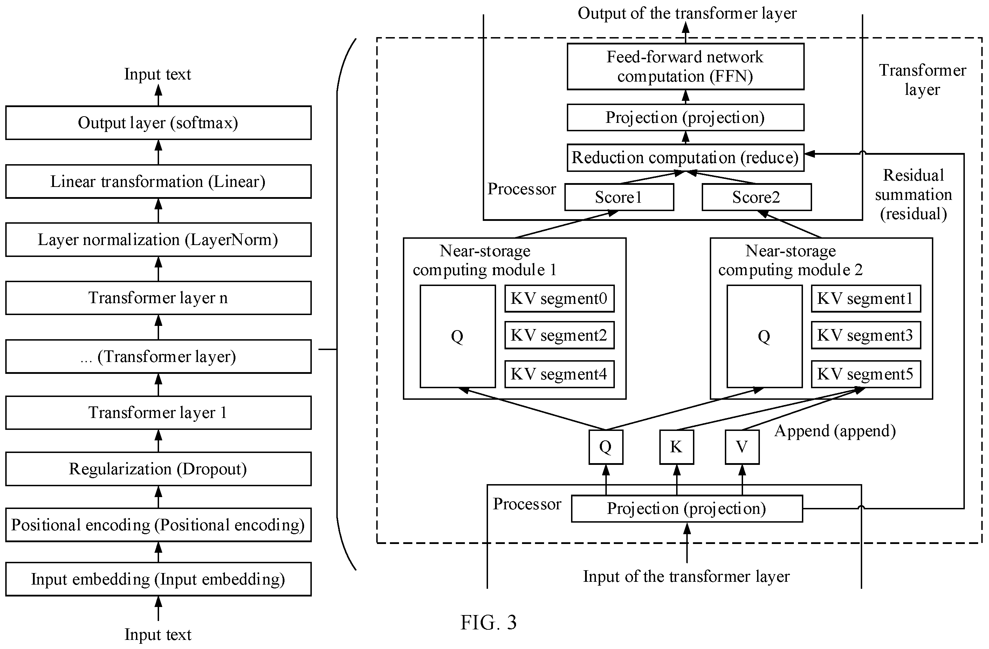

FIG. 3 is a diagram of a large language model inference method according to an embodiment of this application. In an example shown in FIG. 3, the parallel inference system 10 receives the input text input by the user to the large language model, and executes the inference task based on the multi-layer structure of the large language model. In an incremental inference (decode) phase of the inference task, the parallel inference system 10 performs cyclic iterative inference in an autoregressive manner at multiple transformer layers of the large language model. At each transformer layer of the large language model, the processor 101 processes the compute-intensive task, and the near-storage computing module 102 executes the self-attention compute task.

It should be noted that in this embodiment of this application, the large language model may be used to process an ultra-long text sequence. In other words, the inference task of the large language model may correspond to one or more segments of to-be-processed text, and a length of the to-be-processed text is greater than or equal to a first threshold. The first threshold is, for example, 1000 characters.

Because more storage resources need to be consumed when the large language model processes the ultra-long text sequence, and lengths of text sequences processed by the processor 101 in batches are limited due to a limitation of a high bandwidth memory, utilization of the processor 101 is low. Therefore, the parallel inference system 10 offloads the self-attention compute task with high storage resource occupation to the near-storage computing module 102 for execution, and the processor 101 and the near-storage computing module 102 process the inference task of the large language model in parallel, to improve utilization of the processor 101.

Step 202: A processor executes the compute-intensive task to generate intermediate data and sends the intermediate data to a near-storage computing module.

After receiving the compute-intensive task allocated by the parallel inference system, the processor 101 executes the compute-intensive task to generate intermediate data and sends the intermediate data to the near-storage computing module 102. The compute-intensive task includes one or more of the following tasks of the large language model: a feed-forward neural network (feed-forward network, FFN) compute task, a projection (projection) task, and a layer normalization (layer normalization) task.

The feed-forward network compute task includes a compute task executed by a feed-forward network in an inference process of the large language model, and includes tasks such as feature extraction and nonlinear transformation. In the large language model, the feed-forward network usually includes multiple fully connected layers and an activation function, and is configured to perform nonlinear mapping and feature extraction on input data. For example, the feed-forward network can perform nonlinear transformation and feature extraction on an input word vector.

The projection task is a task of mapping an input low-dimension word vector representation to high-dimension space. In the large language model, a projection operation is to transform a word vector representation of the model into a word vector representation of output space to further generate output text. That is, through the projection operation, the model may map a hidden representation to appropriate output space to generate a result that meets a task requirement.

The layer normalization task is a task of standardizing an output at each layer of the large language model, which can accelerate convergence of the large language model and improve a generalization capability of the large language model. In the large language model, a layer normalization operation may be used as a standard operation of each layer, and normalization computation needs to be performed on the output of each layer.

In this embodiment of this application, the intermediate data generated by the processor 101 by executing the compute-intensive task includes a query matrix and key-value cache data. The query matrix is, for example, a matrix including a query (query) vector, and the key-value cache data is, for example, a key (key) vector and a value (value) vector.

Still refer to FIG. 3. In the example shown in FIG. 3, in the process in which the parallel inference system 10 performs the inference task of the large language model, at each transformer layer of the large language model, the processor 101 performs the compute-intensive task such as the layer normalization task and the projection task, to generate the intermediate data, where the intermediate data is the query matrix Q, the key vector K, and the value vector V.

In a possible implementation, after the processor 101 executes the compute-intensive task to generate the intermediate data, the processor 101 segments the intermediate data to generate multiple intermediate data segments and sends the multiple intermediate data segments to the near-storage computing module 102 for self-attention computation.

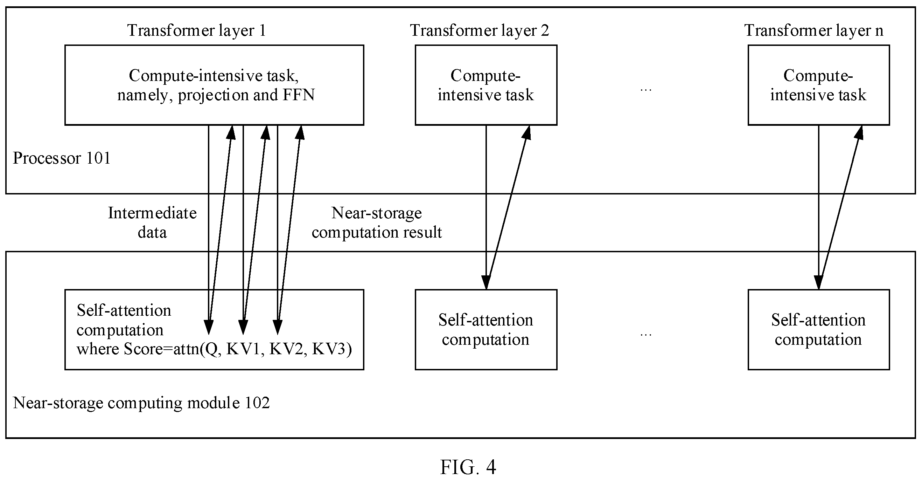

FIG. 4 is a diagram of a large language model inference method according to an embodiment of this application. In an example shown in FIG. 4, the compute-intensive task and a bandwidth-intensive task of the large language model are executed by the processor 101 and the near-storage computing module 102 respectively. The processor 101 needs to send intermediate data to the near-storage computing module 102 in each round of inference computing of the large language model, and receive a near-storage computation result sent by the near-storage computing module 102.

For example, in the example shown in FIG. 4, in an inference process of each transformer layer, the processor 101 executes the projection task and the feed-forward network compute task based on a compute-intensive operator to generate intermediate data of inference at each layer and sends the intermediate data to the near-storage computing module 102 in the inference process of each layer. The near-storage computing module 102 executes the self-attention compute task based on a bandwidth-intensive operator to generate a near-storage computation result of inference at each layer and sends the near-storage computation result to the processor 101.

In the example shown in FIG. 4, the processor 101 may also segment the generated intermediate data, and send pieces of segmented intermediate data to the near-storage computing module. For example, the processor 101 segments the key-value cache generated by executing the compute-intensive task such as the layer normalization task and the projection task, to obtain key-value cache data KV1, key-value cache data KV2, and key-value cache data KV2, and sends the key-value cache data KV1, the key-value cache data KV2, and the key-value cache data KV2 to the near-storage computing module 102 for self-attention computation.

In a possible implementation, if the parallel inference system 10 includes multiple near-storage computing modules 102, in a process in which the processor 101 sends the pieces of segmented intermediate data to the multiple near-storage computing modules 102, the processor 101 cyclically sends the multiple intermediate data segments to the multiple near-storage computing modules 102 respectively, where a difference between total lengths of segmented intermediate data in the multiple near-storage computing modules 102 is less than or equal to a second threshold, that is, the pieces of intermediate data obtained through segmentation of the processor 101 are evenly allocated to the multiple near-storage computing modules 102 for processing.

It should be noted that if the parallel inference system 10 includes the multiple near-storage computing modules 102, the processor 101 may send the query matrix in the intermediate data to the multiple near-storage computing modules 102 in a broadcast (broadcast) manner, and the processor 101 may sequentially send the key-value cache data in the intermediate data to the multiple near-storage computing modules 102 in an append (append) manner.

Still refer to FIG. 3. In the example shown in FIG. 3, the parallel inference system 10 includes two near-storage computing modules: a near-storage computing module 1 and a near-storage computing module 2. The processor 101 executes the compute-intensive task to generate the query matrix Q and the key-value cache data. The key-value cache data includes the key vector K and the value vector V. The processor 101 separately sends the query matrix Q and the key-value cache data to the near-storage computing module 1 and the near-storage computing module 2.

In the example shown in FIG. 3, in a prefill (prefill) inference phase of the large language model, the processor 101 has stored some key-value cache data segments in the near-storage computing module 1 and the near-storage computing module 2. For example, the near-storage computing module 1 stores a key-value segment KV segment0, and the near-storage computing module 2 stores a key-value segment KV segment1. In an incremental inference (decode) phase of the large language model, the processor 101 sends newly added key-value cache data to the near-storage computing module 1 and the near-storage computing module 2 in an append manner. To prevent unbalanced computational load between the two near-storage computing modules, the processor 101 segments the key-value cache data, and cyclically sends key-value cache data segments to the near-storage computing module 1 and the near-storage computing module 2. This cyclic sending manner is also referred to as round robin (round robin) allocation.

For example, in the example shown in FIG. 3, when the processor 101 sends a KV segment3 to the near-storage computing module 2, if a total length of the key-value cache data in the near-storage computing module 2 exceeds a preset value, the processor 101 stops sending the key-value cache data to the computing module 2, and resends a KV segment4 to the near-storage computing module 1, so that a difference between the total lengths of the key-value cache data segments in the near-storage computing module 1 and the near-storage computing module 2 is less than the second threshold.

In the example shown in FIG. 3, for the query matrix Q generated by the processor 101 by executing the compute-intensive task, the processor 101 sends the query matrix Q to the near-storage computing module 1 and the near-storage computing module 2 in the broadcast manner.

Step 203: The near-storage computing module executes the self-attention compute task based on the intermediate data to generate a near-storage computation result.

After receiving the intermediate data sent by the processor 101, the near-storage computing module 102 executes the self-attention compute task based on the intermediate data to generate a near-storage computation result and sends the near-storage computation result to the processor 101. Specifically, the intermediate data includes the query matrix Q and the key-value cache data KV, and the near-storage computing module 102 performs batched self-attention computation based on the query matrix Q and the key-value cache data KV to generate the near-storage computation result.

It may be understood that if the parallel inference system 10 includes the multiple near-storage computing modules 102, the multiple near-storage computing modules 102 may perform self-attention computation in parallel to generate respective near-storage computation results. The multiple near-storage computing modules 102 send the respective near-storage computation results to the processor 101.

Still refer to FIG. 3. In the example shown in FIG. 3, after the near-storage computing module 1 and the near-storage computing module 2 separately receive the query matrix Q and the key-value cache data that are sent by the processor 101, the near-storage computing module 1 and the near-storage computing module 2 perform batched self-attention computation (batched self attention) computation based on the KV segments of the respective near-storage computing modules to generate near-storage computation results. The near-storage computation result of the near-storage computing module 1 is, for example, score1, and the near-storage computation result of the near-storage computing module 2 is, for example, score2. The near-storage computing module 1 and the near-storage computing module 2 respectively send the respective near-storage computation results to the processor 101.

Step 204: The processor generates, based on the near-storage computation result, an inference result corresponding to the inference task.

After receiving the near-storage computation result sent by the near-storage computing module 102, the processor 101 generates, based on the near-storage computation result, an inference result corresponding to the inference task. If the parallel inference system 10 includes the multiple near-storage computing modules 102, after receiving the near-storage computation results sent by the multiple near-storage computing modules 102, the processor 101 performs reduction computation on the near-storage computation results corresponding to the multiple near-storage computing modules 102, and generates an inference result corresponding to the inference task.

Still refer to 3. In the example shown in FIG. 3, after the processor 101 receives the near-storage computation results score1 and score2 sent by the near-storage computing module 1 and the near-storage computing module 2, the processor 101 performs reduction (Reduce) computation and residual (residual) summation on the near-storage computation results score1 and score2, to obtain a processed near-storage computation result. The processor 101 continues to execute the compute-intensive task at a next transformer layer based on the processed near-storage computation result.

In a possible implementation, the processor 101 and the near-storage computing module 102 can process the inference task of the large language model in a pipeline parallel manner. Specifically, because the large language model includes multiple transformer layers, each of the multiple transformer layers includes a compute-intensive task and a self-attention compute task, and execution of a compute-intensive task at a current transformer layer depends on a near-storage computation result of a previous transformer layer, the parallel inference system 10 executes the compute-intensive task and the self-attention compute task in parallel at each transformer layer, where the compute-intensive task is executed by the processor 101, and the self-attention compute task is executed by the near-storage computing module 102.

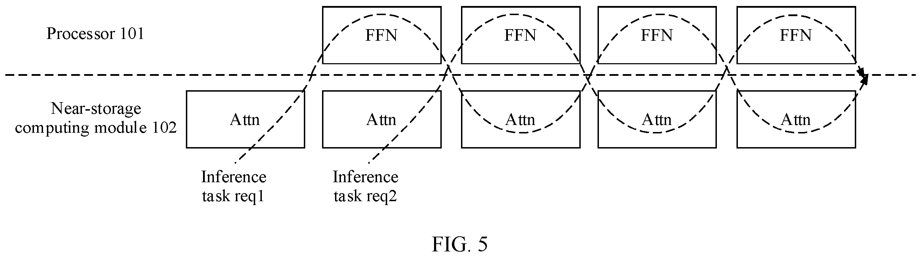

FIG. 5 is another diagram of a large language model inference method according to an embodiment of this application. In an example shown in FIG. 5, the processor 101 and the near-storage computing module 102 in the parallel inference system 10 respectively execute a feed-forward network compute task and a self-attention compute task in parallel. The processor 101 needs an attention computation result of the near-storage computing module 102 at a previous transformer layer to execute a feed-forward network compute task at a current transformer layer. For example, in FIG. 5, the processor 101 needs to depend on a near-storage computation result of executing an Attn task by the near-storage computing module 102 at a previous layer to execute an FFN task.

In the example shown in FIG. 5, to reduce idle time of the processor 101 and the near-storage computing module 102, the processor 101 and the near-storage computing module 102 respectively execute the feed-forward network compute task and the self-attention compute task in a pipeline parallel manner. That is, when the processor 101 executes a feed-forward network compute task corresponding to the former transformer layer, the near-storage computing module 102 executes, in parallel, an attention compute task corresponding to the latter transformer layer.

For example, in the example shown in FIG. 5, when the processor 101 executes a compute-intensive task of an inference task req1, the near-storage computing module 102 executes a self-attention compute task of an inference task req2 in parallel; and when the processor 101 executes a compute-intensive task of the inference task req2, the near-storage computing module 102 executes a self-attention compute task at a next transformer layer of the inference task req1 in parallel, to avoid idleness of the processor 101 and the near-storage computing module 102.

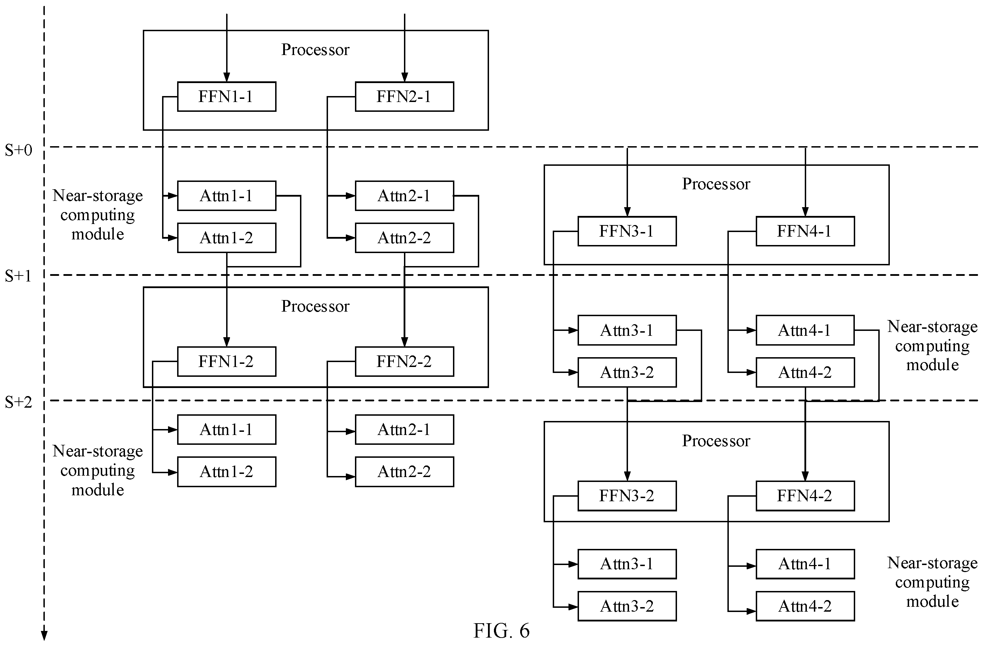

FIG. 6 is a diagram of pipeline parallel inference of a large language model according to an embodiment of this application. In an example shown in FIG. 6, the processor 101 and the near-storage computing module 102 respectively execute a feed-forward network compute task and a self-attention compute task in parallel. An inference task rep1 and an inference task req3 are alternately processed by the processor 101 and the near-storage computing module 102. When the near-storage computing module 102 executes a self-attention compute task corresponding to rep1, the processor 101 executes a feed-forward network compute task corresponding to rep3 in parallel.

For example, in the example shown in FIG. 6, between a moment S+0 and a moment S+1, when the near-storage computing module 102 executes self-attention compute tasks Attn1-1 and Attn1-2 and self-attention compute tasks Attn2-1 and Attn2-2, the processor 101 executes feed-forward network compute tasks FNN3-1 and FNN4-1 in parallel.

In the example shown in FIG. 6, the processor 101 may also execute multiple inference tasks in parallel. For example, the processor 101 executes the inference task rep3 and an inference task rep4 in parallel between the moment S+0 and the moment S+1. The processor 101 executes the inference task rep1 and an inference task rep2 in parallel between the moment S+1 and a moment S+2.

It can be learned from the foregoing embodiments that in embodiments of this application, the processor in the parallel inference system can send the intermediate data generated by executing the compute-intensive task to the near-storage computing module, so that the near-storage computing module executes the bandwidth-intensive self-attention compute task based on the intermediate data. In this way, the self-attention compute task is offloaded to the near-storage computing module, so that the processor in the parallel inference system can avoid memory bottlenecks when executing the compute-intensive task, thereby improving utilization of the processor.

Based on the foregoing method embodiments, embodiments of this application further provide a large language model inference apparatus. The following specifically describes the large language model inference apparatus provided in embodiments of this application.

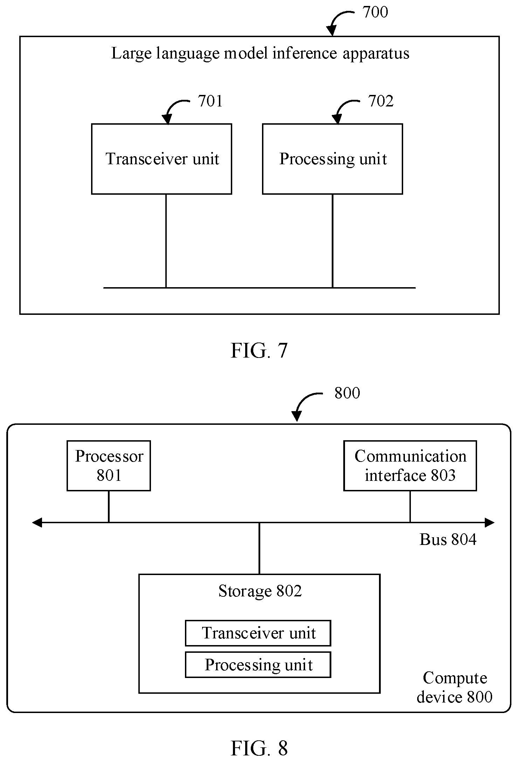

FIG. 7 is a diagram of a structure of a large language model inference apparatus according to an embodiment of this application. In the example shown in FIG. 7, the large language model inference apparatus 700 is configured to implement the steps performed by the parallel inference system in the foregoing embodiments. The large language model inference apparatus 700 includes a transceiver unit 701 and a processing unit 702.

The transceiver unit 701 is configured to receive an inference task of a large language model, where the inference task includes a compute-intensive task and a self-attention compute task. The processing unit 702 is configured to execute, through the processor, the compute-intensive task to generate intermediate data, and send the intermediate data to the near-storage computing module, where the compute-intensive task includes one or more of the following tasks of the large language model: a feed-forward neural network compute task, a projection task, and a layer normalization task. The processing unit 702 is further configured to execute, through the near-storage computing module, the self-attention compute task based on the intermediate data to generate a near-storage computation result. The processing unit 702 is further configured to generate, based on the near-storage computation result, an inference result corresponding to the inference task.

In a possible implementation, a storage capacity of the near-storage computing module is greater than a storage capacity of the processor, and computational power of the processor is greater than computational power of the near-storage computing module.

In a possible implementation, the inference task corresponds to one or more segments of to-be-processed text, and a length of the to-be-processed text is greater than or equal to a first threshold.

In a possible implementation, the parallel inference system includes multiple near-storage computing modules. The processing unit 702 is configured to segment, through the processor, the intermediate data into multiple intermediate data segments; and send, through the processor, the multiple intermediate data segments to the multiple near-storage computing modules. The processing unit 702 is specifically configured to execute, through the near-storage computing modules, the self-attention compute task in parallel based on the multiple intermediate data segments to generate near-storage computation results corresponding to the multiple near-storage computing modules. The processing unit 702 is specifically configured to perform, through the processor, reduction computation on the near-storage computation results corresponding to the multiple near-storage computing modules, and generate the inference result corresponding to the inference task.

In a possible implementation, the transceiver unit 701 is specifically configured to cyclically send, through the processor, the multiple intermediate data segments to the multiple near-storage computing modules respectively, so that a difference among total lengths of the intermediate data segments in the multiple near-storage computing modules is less than or equal to a second threshold.

In a possible implementation, the intermediate data includes a query matrix and key-value cache data, and the processing unit 702 is specifically configured to perform, through the near-storage computing module, batched self-attention computation based on the query matrix and the key-value cache data to generate the near-storage computation result.

In a possible implementation, the large language model includes multiple transformer layers, each of the multiple transformer layers includes a compute-intensive task and a self-attention compute task, execution of a compute-intensive task at a current transformer layer depends on a near-storage computation result of a previous transformer layer, and the processing unit 702 is further configured to execute the compute-intensive task and the self-attention compute task in parallel at each transformer layer, where the compute-intensive task is executed by the processor, and the self-attention compute task is executed by the near-storage computing module.

In a possible implementation, the processor includes one or more of the following: a graphics processing unit GPU, a neural network processing unit NPU, and a data processing unit DPU.

It may be understood that the transceiver unit 701 and the processing unit 702 in the large language model inference apparatus 700 may serve as functional modules having mapping with the modules in the large language model inference system 10 in FIG. 1, to implement functions of the modules in the large language model inference system 10.

It should be understood that division of the units in the foregoing apparatus is merely logical function division. During actual implementation, all or some of the units may be integrated into one physical entity, or may be physically separated. In addition, all the units in the apparatus may be implemented in the form of software invoked by a processing element, or may be implemented in the form of hardware; or some units may be implemented in the form of software invoked by a processing element, and some units may be implemented in the form of hardware. For example, each unit may be a separately disposed processing element, or may be integrated into a chip of the apparatus for implementation. In addition, each unit may alternatively be stored in a storage in the form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all the embodiments described in this specification are preferred embodiments, and the related actions are not necessarily mandatory to this application.

Another appropriate step combination that can be figured out by a person skilled in the art according to the content described above also falls within the protection scope of this application. In addition, a person skilled in the art should also be familiar to embodiments described in this specification all belong to preferred embodiments, and the related actions are not necessarily mandatory to this application.

FIG. 8 is a diagram of a structure of a compute device according to an embodiment of this application. As shown in FIG. 8, the compute device 800 includes a processor 801, a storage 802, a communication interface 803, and a bus 804. The processor 801, the storage 802, and the communication interface 803 are coupled through a bus (not marked in the figure). The storage 802 stores instructions. When the executable instructions in the storage 802 are executed, the compute device 800 performs the method performed by the compute device in the foregoing method embodiments.

The compute device 800 may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus may be implemented in the form of scheduling a program by the processing element, the processing element may be a general-purpose processor, for example, a central processing unit (central processing unit, CPU) or another processor that may invoke the program. For another example, the units may be integrated and implemented in the form of a system-on-a-chip (system-on-a-chip, SoC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The storage 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 802 stores executable program code, and the processor 801 executes the executable program code to separately implement functions of the foregoing units or modules, so as to implement the foregoing large language model inference method. In other words, the storage 802 stores instructions used to perform the foregoing large language model inference method.

The communication interface 803 uses a transceiver module, for example, but not limited to, a network interface card or a transceiver, to implement communication between the compute device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

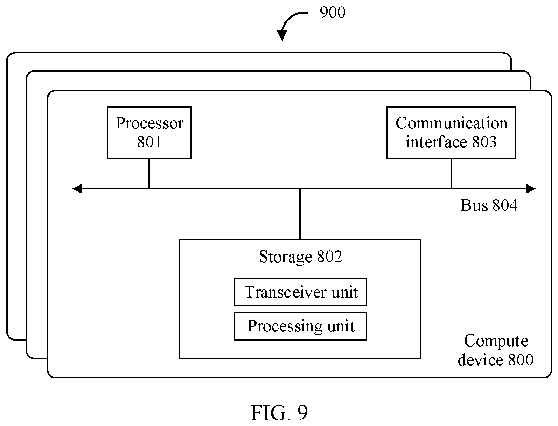

FIG. 9 is a diagram of a compute device cluster according to an embodiment of this application. As shown in FIG. 9, the compute device cluster 900 includes at least one compute device 800.

As shown in FIG. 9, the compute device cluster 900 includes at least one compute device 800. A storage 802 in one or more compute devices 800 in the compute device cluster 900 may store same instructions used to perform the foregoing large language model inference method.

In some possible implementations, alternatively, the storage 802 in the one or more compute devices 800 in the compute device cluster 900 may separately store a part of instructions used to perform the foregoing large language model inference method. In other words, a combination of the one or more compute devices 800 may jointly execute instructions used to perform the foregoing large language model inference method.

It should be noted that storages 802 in different compute devices 800 in the compute device cluster may store different instructions separately used to perform a part of functions of the foregoing large language model inference apparatus. In other words, instructions stored in storages 802 in different compute devices 800 may implement functions of one or more modules in the transceiver unit and the processing unit.

In some possible implementations, the one or more compute devices 800 in the compute device cluster 900 may be connected through a network. The network may be a wide area network, a local area network, or the like.

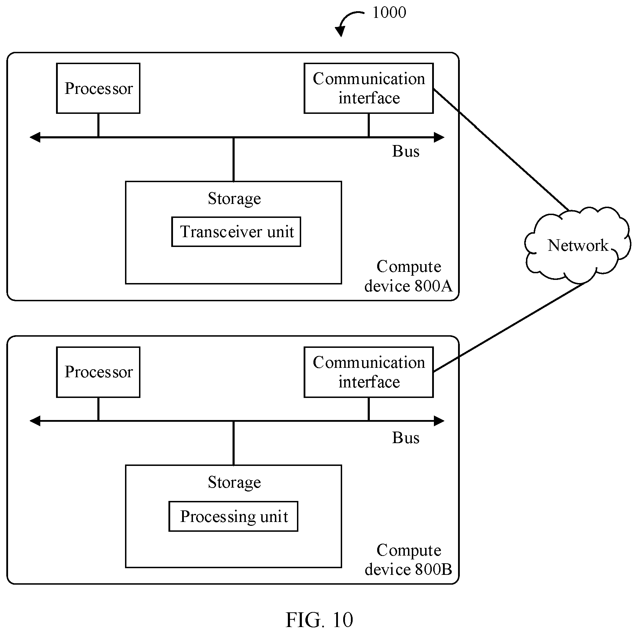

FIG. 10 is a diagram in which computer devices in a computer cluster are connected through a network according to an embodiment of this application. As shown in FIG. 10, two compute devices 800A and 800B are connected through a network. Specifically, each compute device is connected to the network through a communication interface in the compute device.

In a possible implementation, a storage in the compute device 800A stores instructions for performing functions of the transceiver unit. In addition, the storage in the compute device 800B stores instructions for performing functions of the processing unit.

It should be understood that functions of the compute device 800A shown in FIG. 10 may alternatively be completed by multiple compute devices. Similarly, functions of the compute device 800B may alternatively be completed by multiple compute devices.

In another embodiment of this application, a computer-readable storage medium is further provided. The computer-readable storage medium stores computer-executable instructions. When a processor of a device executes the computer-executable instructions, the device performs the method performed by the compute device in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the compute device in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A large language model inference method, applied to a parallel inference system, wherein the parallel inference system comprises a processor and a near-storage computing module, both the processor and the near-storage computing module are configured to execute a task allocated by the parallel inference system, and the method comprises:
receiving, by the parallel inference system, an inference task of a large language model, wherein the inference task comprises a compute-intensive task and a self-attention compute task;
executing, by the processor, the compute-intensive task to generate intermediate data, and sending the intermediate data to the near-storage computing module, wherein the compute-intensive task comprises one or more of the following tasks of the large language model: a feed-forward neural network compute task, a projection task, and a layer normalization task;
executing, by the near-storage computing module, the self-attention compute task based on the intermediate data to generate a near-storage computation result; and
generating, by the processor based on the near-storage computation result, an inference result corresponding to the inference task.

2. The method according to claim 1, wherein a storage capacity of the near-storage computing module is greater than a storage capacity of the processor, and computational power of the processor is greater than computational power of the near-storage computing module.

3. The method according to claim 1 or 2, wherein the inference task corresponds to one or more segments of to-be-processed text, and a length of the to-be-processed text is greater than or equal to a first threshold.

4. The method according to any one of claims 1 to 3, wherein the parallel inference system comprises multiple near-storage computing modules, and the sending, by the processor, the intermediate data to the near-storage computing module comprises:
segmenting, by the processor, the intermediate data into multiple intermediate data segments; and
sending, by the processor, the multiple intermediate data segments to the multiple near-storage computing modules;
the executing, by the near-storage computing module, the self-attention compute task based on the intermediate data comprises:
executing, by the multiple near-storage computing modules, the self-attention compute task in parallel based on the multiple intermediate data segments to generate near-storage computation results corresponding to the multiple near-storage computing modules; and
the generating, by the processor based on the near-storage computation result, the inference result corresponding to the inference task comprises:
performing, by the processor, reduction computation on the near-storage computation results corresponding to the multiple near-storage computing modules, and generating the inference result corresponding to the inference task.

5. The method according to claim 4, wherein the sending, by the processor, the multiple intermediate data segments to the multiple near-storage computing modules comprises:
cyclically sending, by the processor, the multiple intermediate data segments to the multiple near-storage computing modules respectively, so that a difference among total lengths of the intermediate data segments in the multiple near-storage computing modules is less than or equal to a second threshold.

6. The method according to any one of claims 1 to 3, wherein the intermediate data comprises a query matrix and key-value cache data, and the executing, by the near-storage computing module, the self-attention compute task based on the intermediate data further comprises:
performing, by the near-storage computing module, batched self-attention computation based on the query matrix and the key-value cache data to generate the near-storage computation result.

7. The method according to any one of claims 1 to 4, wherein the large language model comprises multiple transformer layers, each of the multiple transformer layers comprises the compute-intensive task and the self-attention compute task, execution of the compute-intensive task at a current transformer layer depends on a near-storage computation result of a previous transformer layer, and the method further comprises:
executing, by the parallel inference system, the compute-intensive task and the self-attention compute task in parallel at each transformer layer, wherein the compute-intensive task is executed by the processor, and the self-attention compute task is executed by the near-storage computing module.

8. The method according to any one of claims 1 to 5, wherein the processor comprises one or more of the following: a graphics processing unit GPU, a neural network processing unit NPU, and a data processing unit DPU.

9. A large language model inference apparatus, applied to a parallel inference system, wherein the parallel inference system comprises a processor and a near-storage computing module, both the processor and the near-storage computing module are configured to execute a task allocated by the parallel inference system, and the apparatus comprises:
a transceiver unit, configured to receive an inference task of a large language model, wherein the inference task comprises a compute-intensive task and a self-attention compute task; and
a processing unit, configured to execute, through the processor, the compute-intensive task to generate intermediate data, and send the intermediate data to the near-storage computing module, wherein the compute-intensive task comprises one or more of the following tasks of the large language model: a feed-forward neural network compute task, a projection task, and a layer normalization task;
the processing unit is further configured to execute, through the near-storage computing module, the self-attention compute task based on the intermediate data to generate a near-storage computation result; and
the processing unit is further configured to generate, based on the near-storage computation result, an inference result corresponding to the inference task.

10. The apparatus according to claim 9, wherein a storage capacity of the near-storage computing module is greater than a storage capacity of the processor, and computational power of the processor is greater than computational power of the near-storage computing module.

11. The apparatus according to claim 9 or 10, wherein the inference task corresponds to one or more segments of to-be-processed text, and a length of the to-be-processed text is greater than or equal to a first threshold.

12. The apparatus according to any one of claims 9 to 11, wherein the parallel inference system comprises multiple near-storage computing modules, and the processing unit is configured to:
segment, through the processor, the intermediate data into multiple intermediate data segments; and
send, through the processor, the multiple intermediate data segments to the multiple near-storage computing modules;
the processing unit is specifically configured to:
execute, through the near-storage computing modules, the self-attention compute task in parallel based on the multiple intermediate data segments to generate near-storage computation results corresponding to the multiple near-storage computing modules; and
the processing unit is specifically configured to:
perform, through the processor, reduction computation on the near-storage computation results corresponding to the multiple near-storage computing modules, and generate the inference result corresponding to the inference task.

13. The apparatus according to claim 12, wherein the transceiver unit is specifically configured to:
cyclically send, through the processor, the multiple intermediate data segments to the multiple near-storage computing modules respectively, so that a difference among total lengths of the intermediate data segments in the multiple near-storage computing modules is less than or equal to a second threshold.

14. The apparatus according to any one of claims 9 to 11, wherein the intermediate data comprises a query matrix and key-value cache data, and the processing unit is specifically configured to:
perform, through the near-storage computing module, batched self-attention computation based on the query matrix and the key-value cache data to generate the near-storage computation result.

15. The apparatus according to any one of claims 9 to 12, wherein the large language model comprises multiple transformer layers, each of the multiple transformer layers comprises the compute-intensive task and the self-attention compute task, execution of the compute-intensive task at a current transformer layer depends on a near-storage computation result of a previous transformer layer, and the processing unit is further configured to:
execute the compute-intensive task and the self-attention compute task in parallel at each transformer layer, wherein the compute-intensive task is executed by the processor, and the self-attention compute task is executed by the near-storage computing module.

16. The apparatus according to any one of claims 9 to 15, wherein the processor comprises one or more of the following: a graphics processing unit GPU, a neural network processing unit NPU, and a data processing unit DPU.

17. A compute device, comprising a processor, wherein the processor is coupled to a storage, the processor is configured to store instructions, and when the instructions are executed by the processor, the electronic device is enabled to perform the method according to any one of claims 1 to 8.

18. A compute device cluster, comprising at least one compute device, wherein the compute device comprises a processor, the processor is coupled to a storage, the processor is configured to store instructions, and when the instructions are executed by the processor, the compute device cluster is enabled to perform the method according to any one of claims 1 to 8.

19. A computer-readable storage medium, wherein the computer-readable storage medium stores instructions, and when the instructions are executed, a computer is enabled to perform the method according to any one of claims 1 to 8.

20. A computer program product, wherein the computer program product comprises instructions, and when the instructions are executed, a computer is enabled to implement the method according to any one of claims 1 to 8.
